**Europäisches Patentamt**

**European Patent Office**

**Office européen des brevets**

(19)

(11) Veröffentlichungsnummer : **0 355 155 B1**

(12) # EUROPÄISCHE PATENTSCHRIFT

(45) Veröffentlichungstag der Patentschrift :
**16.09.92 Patentblatt 92/38**

(51) Int. Cl.$^5$ : **F16L 37/12**

(21) Anmeldenummer : **89902643.9**

(22) Anmeldetag : **20.02.89**

(86) Internationale Anmeldenummer :
**PCT/EP89/00154**

(87) Internationale Veröffentlichungsnummer :
**WO 89/07729 24.08.89 Gazette 89/20**

(54) **STECKKUPPLUNG.**

(30) Priorität : **20.02.88 DE 8802195 U**

(43) Veröffentlichungstag der Anmeldung :
**28.02.90 Patentblatt 90/09**

(45) Bekanntmachung des Hinweises auf die
Patenterteilung :
**16.09.92 Patentblatt 92/38**

(84) Benannte Vertragsstaaten :
**AT BE CH DE FR GB IT LI LU NL SE**

(56) Entgegenhaltungen :
**DE-C- 3 247 784**
**US-A- 3 757 836**
**US-A- 4 716 938**

(73) Patentinhaber : **Weh, Erwin**
**Siemensstrasse 5**
**W-7918 Illertissen (DE)**
Patentinhaber : **WEH, Wolfgang**
**Siemensstr. 5**
**W-7918 Illertissen (DE)**

(72) Erfinder : **Weh, Erwin**
**Siemensstrasse 5**
**W-7918 Illertissen (DE)**
Erfinder : **WEH, Wolfgang**
**Siemensstr. 5**
**W-7918 Illertissen (DE)**

(74) Vertreter : **Reinhard, Skuhra, Weise**
**Friedrichstrasse 31**
**W-8000 München 40 (DE)**

## Beschreibung

Gebiet der Erfindung:

Die Erfindung betrifft eine Steckkupplung zum druckdichten Verbinden an eine einen Anschlußnippel oder dergleichen aufweisenden Vorrichtung.

Stand der Technik:

Die US-A-4,716,938 (&EP-A-0202592) offenbart Ausfürungsbeispiele von Steckkupplungen, die einen raschen und sicheren Anschluß einer ein gasförmiges oder flüssiges Medium führenden Leitung an einen Verbinder einer beliebigen Vorrichtung ermöglichen.

Bei verschiedenen Anwendungen sind jedoch die Raumverhältnisse derart beschränkt, daß sich die bekannten Steckkupplungen nur schwer anwenden lassen.

Zusammenfassung der Erfindung:

Der Erfindung liegt die Aufgabe zugrunde, eine möglichst klein bauende, einfach bedienbare Steckkupplung anzugeben.

Diese Aufgabe wird gemäß der Erfindung einmal gelöst durch eine Steckkupplung zum druckdichten Verbinden an eine einen Anschlußnippel oder dergleichen aufweisende Vorrichtung, enthaltend ein im wesentlichen zylindrisches Gehäuse, einen darin axial auf einem zentralen Stift verschiebbar gegenüber dem Gehäuse abgedichteten-Kolben, an dessen vorderer Stirnseite an ihren vorderen Enden radial spreizbare Klemmbacken angebracht sind, ein Bedienteil, das an der Rückseite des zentralen Stifts angebracht ist, eine Druckfeder, die sich zwischen der Rückseite des Kolbens und dem Bedienteil abstützt, eine weitere Druckfeder, die sich zwischen dem Bedienteil und dem axial im Gehäuse bis zu einer Begrenzung verschiebbaren Federhalter abstützt und eine stirnseitig am Gehäuse angebrachte ringförmige Abdichtung zur Anlage mit dem Anschlußnippel oder dergleichen unter Druck der weiteren Feder, wobei die Kolbenfläche des Kolbens entmeder größer ist bei Anschluß Überdruck, oder kleiner, bei Anschluß Vakuum, als diejenige an der Abdichtung und die Klemmbacken Innenflächen besitzen, die in Anlage mit einem radial erweiterten Rand des vorderen Endes des zentralen Stiftes sind.

Diese genannte Aufgabe wird gemäß der Erfindung ferner gelöst durch eine Steckkupplung zum druckdichten Verbinden an eine einen Anschlußnippel oder dergleichen aufweisende Vorrichtung, enthaltend ein im wesentlichen zylindrisches Gehäuse, an dessen vorderer Stirnseite an ihren vorderen Enden radial spreizbare Klemmbacken angebracht sind, einen im Gehäuse axial verschiebbar angeordneten, gegenüber dem Gehäuse abgedichteten Kolben, ein Bedienteil, das an der Rückseite eines zentralen Stifts angebracht ist, eine Druckfeder, die sich zwischen der Rückseite des Kolbens und dem Inneren des Gehäuses abstützt, eine weitere Druckfeder, die sich zwischen dem Bedienteil und dem Gehäuse abstützt und eine stirnseitig am Gehäuse angebrachte ringförmige Abdichtung zur Anlage mit dem Anschlußnippel oder dergleichen unter Druck der weiteren Feder, wobei die wirksame Kolbenfläche des Kolbens entmeder größer ist bei Anschluß an Überdruck, oder kleiner, bei Anschluß an Vakuum, als diejenige an der Abdichtung und die Klemmbacken Innenflächen besitzen, die in Anlage mit einem radial erweiterten Rand des vorderen Endes des zentralen Stiftes sind.

Bevorzugte Weiterbildungen der erfindungsgemäßen Steckkupplung sind in den abhängigen Ansprüchen gekennzeichnet.

Die Steckkupplung bietet gegenüber den bekannten Ausführungsformen den Vorteil, daß sie kleiner baut, vor allem in der Länge, was bei einigen Anwendungen unabdingbar ist. Außerdem kann das Druckmedium bei einer Ausführungsform von hinten durch eine zentrale Bohrung alternativ zu einem seitlichen Anschluß zugeführt werden. Die Steckkupplung eignet sich für gasförmige und flüssige Medien. Ein wichtiger Unterschied zu den bekannten Steckkupplungen besteht darin, daß nicht die Klemmbacken auf den Stift gezogen werden, sondern der Stift in die Klemmbackenanordung. Sobald der Stift in die Klemmbackenanordung eingezogen ist, macht das Gehäuse eine Relativbewegung zur Klemmbackenanordnung, wodurch sich die Steckkupplung fest gegen die Dichtfläche des anzuschließenden Teiles zieht. Um diese Bewegung zu erreichen, werden z.B. zwei Federn eingesetzt. Eine, um den Stift in die Kemmbackenanordnung zu ziehen, die zweite um das Gehäuse relativ zu den Innenteilen nach vorn zu verschieben, um so eine Abdichtung gegen das anzuschließende Teil zu erreichen. Ein Vorteil hier ist auch die einfache Form der Innenfläche der Klemmbackenanordnung.

Kurze Beschreibung der Zeichnungen:

Weitere Merkmale und Vorteile der erfindungsgemäßen Steckkupplung ergeben sich aus der nachfolgenden Beschreibung von Ausführungsbeispielen anhand der Zeichnung. Es zeigen

Fig. 1 einen Längsschnitt durch eine erste Ausführungsform der erfindungsgemäßen Steckkupplung und
Fig. 2 einen Längsschnitt durch eine zweite Ausführungsform der erfindungsgemäßen Steckkupplung.
Fig. 3 eine dritte Ausführungsform der Erfindung.

Beste Art der Ausführung der Erfindung:

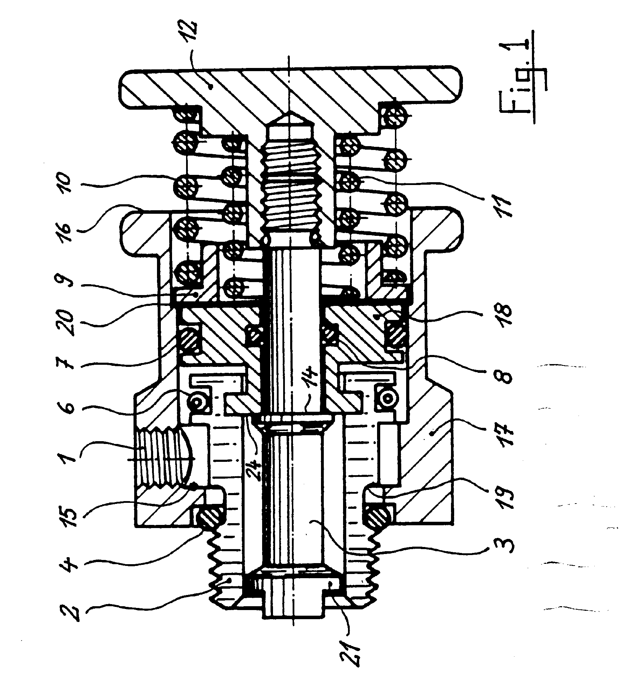

Fig. 1 zeigt ein Gehäuse 17 mit rückseitiger Anschlagfläche 16. Im Gehäuse 17 ist ein Kolben 18 abgedichtet durch Ringdichtung 7 längsverschiebbar geführt. Am vorderen Ende des Kolbens 18 sind bevorzugt mit Außengewinde versehene Klemmbacken 2 eingehängt. Diese Klemmbacken 2 werden mittels eines Sicherungselements 6, etwa einer Feder oder einem Draht zusammengehalten.

Der Kolben 18 ist auf einem zentrischen Stift 3 geführt, der am vorderen Ende einen radial erweiterten Rand 21 hat und auf dem am anderen Ende ein an seiner Rückseite bevorzugt tellerartig ausgeführtes Bedienelement 12 angebracht, insbesondere aufgeschraubt ist. Zwischen dem Bedienelement 12 und dem Kolben 18 erstreckt sich unter Einfügung eines Federhalters 9 eine Druckfeder 10. Die Bewegung des Federhalters 9 in Längsrichtung nach vorn ist durch einen inneren Anschlag 20 im Gehäuse begrenzt.

Durch eine zentrische Öffnung im Federhalter 9 erstreckt sich eine weitere Druckfeder 11 zwischen Stirnflächen des Bedienelements 12 und des Kolbens 18, der gegenüber dem zentrischen Stift 3 mittels einer Ringdichtung 8 abgedichtet ist.

In der vorderen Stirnfläche des Gehäuses 17 ist eine Ringdichtung 4 eingelassen, die bei der Bewegung des Kolbens 18 von der Anschlagsfläche 19 an den Klemmbacken 2 um ein gewisses Ausmaß mit nach vorn genommen wird, bis ein Anschlag 24 an den Klemmbacken 2 in Anlage mit einem inneren Anschlag 15 des Gehäuses kommt.

Ein ringförmiger Rand 14 begrenzt die Relativbewegung zwischen dem zentrischen Stift 3 und dem Kolben 18.

Die Einleitung des Druckmediums erfolgt hier über einen Anschluß 1.

Die Steckkupplung gemäß Fig. 1 arbeitet wie folgt:
– Man drückt mit der Hand das Bedienteil 12 in Richtung der Anschlagfläche 16.
– Dabei wird zunächst die Feder 10, die bereits vorgespannt war, zusammengedrückt. Die Feder liegt dabei an der Anschlagstirnfläche des Federhalters 9 an, der wiederum an dem inneren Anschlag 20 des Gehäuses 17 anliegt. Das heißt, die Feder 10 drückt sich praktisch gegen das Gehäuse 17 ab.
– Die Feder 11, die ebenfalls axial vorgespannt ist, bewegt durch die Bewegung des Bedienteiles 12 nach vorn, auch den Kolben 18 und damit die Klemmbacken 2 nach vorn.
– Das Dichtelement 4 wird dabei nach einem bestimmten Weg der Klemmbacken 2 durch die Anschlagfläche 19 mit aus dem Gehäuse 17 genommen.
– Nach einem definierten Weg schlägt dann die Anschlagfläche 19 der Klemmbacken gegen die Anschlagfläche 15 des Gehäuses 17 und verhindert so eine weitere Axialbewegung nach vorn der Klemmbacken 2.

Natürlich können die Anschlagflächen auch an anderer Stelle und in anderer Zuordnung in nicht dargestellter Weise angebracht werden. Es muß nur das weitere Vorfahren der Klemmbacken 2 verhindert werden. Eine Anschlagfläche könnte beispielsweise auch am Kolben 18 angebracht sein.
– Num macht der zentrische Stift 3 eine weitere axiale Bewegung nach vorn und fährt aus der Innenfläche der Klemmbacken 2 heraus.
– Dadurch können die Klemmbacken 2 radial nach innen schwenken.

Dieses Zusammenfallen wird hierbei entweder durch eine radiale Vorspannung des Dichteelements 4 erreicht, oder durch eine radiale Vorspannung des Sicherungselements 6. In diesem Fall muß das Sicherungselement 6 weiter nach vorn verlegt werden, damit es eine geeignete Kraft ausüben kann.
– Nun kann man den Steckanschluß in das Gewinde des anzuschließenden Teiles bis zum Dichtelement 4 einführen.
– Beim Loslassen des Bedienteiles 9 wird zunächst der Stift 3 in die Innenflächen der Klemmbacken 2 gezogen. Dies geschieht durch die Feder 11, die in ihrer Wirkung versucht den Kolben 18 und damit die Klemmacken 17 in ihrer vorderen Position zu halten. Durch die Feder 10 wird aber der Stift 3 insgesamt nach hinten bewegt.
– Nach einem definierten Weg stößt nun die Anschlagfläche 14 des Stiftes 3 gegen eine Anschlagfläche 24 am Kolben 18 an. Diese Anschlagfläche kann auch anders angebracht werden, beispielsweise in nicht dargestellter Weise an den Klemmbacken 2.

– Nun zieht der Stift den Kolben 18 und damit die Klemmbacken 2 weiter zurück, d. h. eigentlich wird das Gehäuse relativ nach vorn bewegt, weil die Klemmbacken 2 ja fest mit dem anzuschließenden Teil versperrt sind.

– In der Folge dichtet das Dichtungselement (O-Ring) 4 gegen eine Dichtfläche des anzuschließenden Teiles ab.

Nun kann der Innenraum der Steckkupplung mit Druck beaufschlagt werden.

– Durch geeignete Wahl der wirksamen Kolbenflächen der Ringdichtungen 7 und 8 gegenüber dem Dichtelement 4 wird das Gehäuse 17 selbsttätig immer fester gegen die Dichtfläche des anzuschließenden Teiles gedrückt. Dadurch wird auch bei hohen Drücken eine sichere Verbindung erreicht.

– Die Klemmbacken 2 müssen an ihren Außenflächen nicht unbedingt mit einem Gewinde versehen sein, sondern können beliebige Formen aufweisen. Wenn nicht an ein Gewinde angeschlossen wird, ist der Anschlag 19 nicht erforderlich.

– Über einen seitlichen Anschluß 1 kann das Druckmedium zugeführt werden. Läßt man diesen weg, oder verschließt ihn, so läßt sich die Steckkupplung als Verschlußstopfen einsetzen.

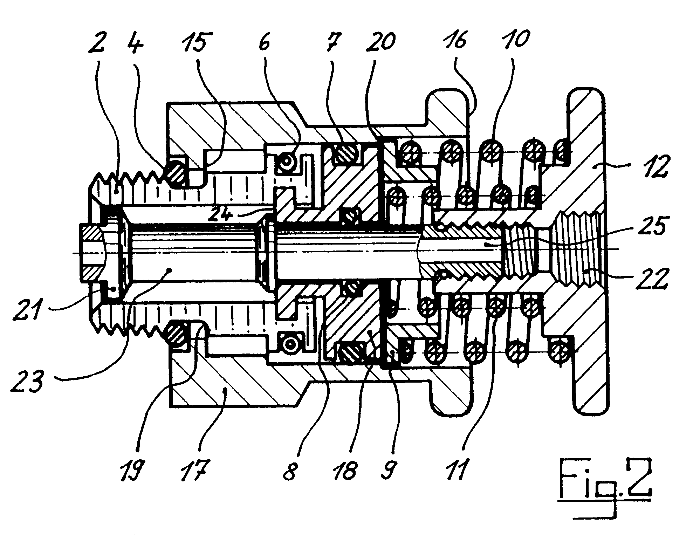

Die Fig. 2 zeigt eine zweite Ausführungsform der erfindungsgemäßen Steckkupplung, bei der vorteilhaft die Zuführung des Druckmediums über eine zentrale Bohrung 25 in einem Stift 23 von einem Anschluß 22 aus erfolgt. Der übrige Aufbau entspricht demjenigen des Ausführungsbeispiels der Fig. 1.

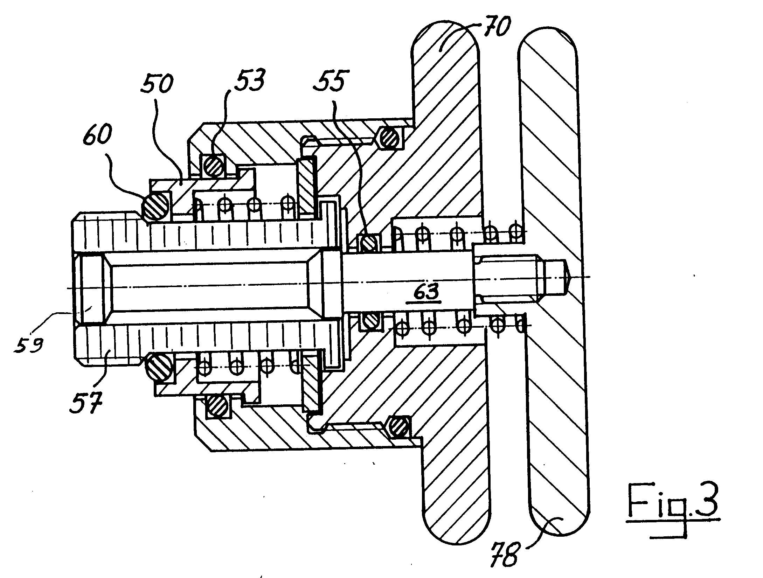

Fig. 3 zeigt ein weiteres Ausführungsbeispiel mit in diesem Falle an der Innenseite des Gehäuses 70 eingehängten Klemmbacken 57, einem Dichtungselement 60 an der Stirnseite eines Schiebeelements 50, einem dieses abdichtenden Dichtelements 53 und einer weiteren Abdichtung 55 zum zentralen Stift 63. Die Abdichtung gegen das anzuschließende Teil erfolgt über das mit Federkraft vorgespannte Schiebeelement 50 mit Dichtelement 60, das seinerseits nach außen gegen das Gehäuse hin über das Dichtelement 53 abgedichtet ist.

Drückt man das Bedienungsteil 78 nach vorn, so können durch dessen Loslassen die Klemmbacken 57 gespreizt werden. Zum Hineinstecken in den Gewindeanschluß schiebt man das Schiebeelement 50 unter Anlage an der Stirnfläche des anzuschließenden Teils zurück, läßt nun das Bedienteil 78 los, so daß sich die Klemmbacken 57 aufspreizen und durch eine radiale stirnseitige Erweiterung 59 sicher im Eingriff mit dem anzuschließenden Teil gehalten werden.

Für die erfindungsgemäße Steckkupplung ist wesentlich, daß z.B. über die Feder 11 der zentrische Stift 3 in die Innenflächen der Klemmbacken 2 fährt und diese im angeschlossenen Zustand z.B. in einem Innengewinde eines anzuschließenden Teiles versperrt, und daß ein Dichtelement 4 über eine Feder 10 gegen die Abdichtfläche eines anzuschließeriden Teils drückt und diese Federkraft durch eine geeignete Wahl dei Kolbenverhältnisse vom Druck unterstützt wird.

Es sei besonders daraufhingewiesn, daß die erfindungsgemäße Steckkupplung auch als rein mechanisches Spannelement in Form eines Greifarms für Roboter o. dergl. eingesetzt werden kann. In diesem Falle werden die Dichtelemente am Kolben weggelassen.

Es ist ferner verständlich, daß die Druckunterstützung durch die unterschiedlichen Kolbenflächen nur bei hohen Drucken erforderlich ist. Aus Platzgründen kann es z. B. ratsam sein,kleine Kolben zu wählen, um so den Durchmesser der Gesamtanordnung gering zu halten.

## Patentansprüche

1. Steckkupplung zum druckdichten Verbinden an eine einen Anschlußnippel oder dergleichen aufweisende Vorrichtung, enthaltend

ein im wesentlichen zylindrisches Gehäuse (17), einen darin axial auf einem zentralen Stift (3) verschiebbar gegenüber dem Gehäuse abgedichteten Kolben (18), an dessen vorderer Stirnseite an ihren vorderen Enden radial spreizbare Klemmbacken (2) angebracht sind, ein Bedienteil (12), das an der Rückseite des zentralen Stifts (3) angebracht ist,

eine Druckfeder (11), die sich zwischen der Rüskseite des Kolbens (18) und dem Bedeinteil (12) abstützt,

eine weitere Druckfeder (10), die sich zwischen dem Bedienteil (12) und einem achsial im Gehäuse (17) bis zu einer Begrenzung (20) verschiebbaren Federhalter (9) abstützt und

eine stirnseitig am Gehäuse angebrachte ringförmige Abdichtung (4) zur Anlage mit dem Anschlußnippel oder dergleichen unter Druck der weiteren Feder (10), wobei die Kolbenfläche des Kolbens (18) entmeder größer ist bei Anschluß an Überdruck, oder kleiner, Anclhluß an bei Vakuum, als diejenige an der Abdichtung (4) und die Klemmbacken (2) Innenflächen besitzen, die in Anlage mit einem radial erweiterten Rand (21) des vorderen Endes des zentralen Stiftes (3) sind.

2. Steckkupplung nach Anspruch 1, dadurch gekennzeichnet, daß die Vorwärtsbewegung des zentralen Stiftes (3) begrenzt wird durch eine Anschlagsfläche (16) am Gehäuse (17) zur Anlage mit einer Anschlagsfläche am Bedienteil (12).

3. Steckkupplung nach einem der vorhergenden Ansprüche, dadurch gekennzeichnet, daß die Vorwärtsbewegung des Kolbens (18) und damit der Klemmbacken (2) begrenzt wird durch sich einander gegenüberstehende Anschlagsflächen (15 bzw. 24) an einem Rand des Gehäuses (17) bzw. an den Klemmbacken (2).

4. Steckkupplung zum druckdichten Verbinden an eine einen Anschlußnippel oder dergleichen aufweisende Vorrichtung, enthaltend
   ein im wesentlichen zylindrisches Gehäuse (70), an dessen vorderer Stirnseite an ihren vorderen Enden radial spreizbare Klemmbacken (57) angebracht sind,
   einen im Gehäuse axial verschiebbar angeordneten, gegenüber dem Gehäuse abgedichteten Kolben (50),
   ein Bedienteil (78), das an der Rückseite eines Stifts (63) angebracht ist, der sich zentral in dem Gehäuse (70) erstreckt,
   eine Druckfeder, die sich zwischen der Rückseite des Kolbens (50) und dem Inneren des Gehäuses (70) abstützt, eine weitere Druckfeder, die sich zwischen dem Bedienteil (78) und dem Gehäuse (70) abstützt und eine stirnseitig am Gehäuse angebrachte ringförmige Abdichtung (60) zur Anlage mit dem Anschlußnippel oder dergleichen unter Druck der weiteren Feder (10), wobei die wirksame Kolbenfläche des Kolbens (50) entmeder größer ist, bei Anschluß an Überdruck, oder kleiner, bei Anschluß an Vakuum, als diejenige an der Abdichtung (60) und die Klemmbacken (57), Innenflächen besitzen, die in Anlage mit einem radial erweiterten Rand (59) des vorderen Endes des zentralen Stiftes (63) sind.

5. Steckkupplung nach einem der vorhergehenden Ansprüche, dadurch gekennzeichnet, daß eine seitliche Zufuhröffnung (1) für ein gasförmiges oder flüssiges Medium im vorderen Teil des Gehäuses angebracht ist.

6. Steckkupplung nach einem der vorhergehenden Ansprüche, dadurch gekennzeichnet, daß eine Zuführröffnung (22) zentral am Bedienteil (12) angeordnet ist und mit einer Durchgangsbohrung im zentralen Stift (23) in Verbindung steht.

## Claims

1. An insertable coupling for pressure-tight connecting to a means featuring a connecting nipple and the like, comprising
   a substantially cylindrical body (17),
   a sealed piston (18) housed therein for sliding on a central pin (3) with respect to said body, the front end of the piston being provided with clamping jaws (2) radially expandable at their front ends,
   a control element (12) provided on the rear side of said central pin (3),
   a compression spring (11) supported between the rear end of said piston (18) and said control element (12),
   a further compression spring (10) supported between said control element (12) and a spring holder (9) free to slide axially in said body (17) up to a stop (20) and
   a ring-shaped seal (4) provided on the front end of said body to contact said connecting nipple and the like under the pressure of said further spring (10), whereby the piston surface of said piston (18) is either larger or smaller than that of said seal (4) when connected to a pressure more or less than atmospheric pressure respectively and said clamping jaws (2) have internal surfaces in contact with one radially expanded edge (21) of the front end of said central pin (3).

2. An insertable coupling according to claim 1, wherein forward movement of the central pin (3) is limited by a stop surface (16) on the body (17) for contacting a contact surface on the control element (12).

3. An insertable coupling according to any of the above claims, wherein forward movement of the piston (18) and thus of the clamping jaws (2) is limited by opposing stop surfaces (15 and 24 respectively) on one edge of the housing (17) and on the clamping jaws (2) respectively.

4. An insertable coupling for pressure-tight connecting to a means featuring a connecting nipple and the like, comprising

a substantially cylindrical body (17),on the front end of which clamping jaws (57) are provided radially expandable at their front ends,

a piston (50) arranged free to slide axially in said body and sealed with respect to said body

a control element (78) provided on the rear side of a pin (63) extending centrally in said body (70),

a compression spring supported between the rear side of said piston (50) and the inside of said body (70),

a further compression spring supported between said control element (78) and said body (70) and

a ring-shaped seal (60) provided on the front end of said body to contact said connecting nipple and the like under the pressure of said further spring (10), whereby the piston surface of said piston (50) is either larger or smaller than that of said seal (60) when connected to a pressure more or less than atmospheric pressure respectively and said clamping jaws (57) have internal surfaces in contact with one radially expanded edge (59) of the front end of said central pin (63).

5. An insertable coupling according to any of the above claims, wherein a side supply port (1) for a gaseous or liquid medium is provided in the front part of the body.

6. An insertable coupling according to any of the above claims, wherein a supply port (22) is arranged centrally on the control element (12) and is connected to a thru-bore in the central pin (23).

**Revendications**

1. Raccord à emboîtement pour assurer un raccordement étanche à la pression avec un dispositif muni d'une tubulure de raccordement ou d'un moyen analogue, comprenant un boîtier (17) sensiblement cylindrique, un piston (18) formant un joint étanche par rapport au boîtier et déplaçable axialement dans celui-ci sur une tige centrale (3), sur la face frontale duquel piston sont montées des mâchoires de serrage (2) agencées de manière à pouvoir s'écarter radialement à leurs extrémités avant, un moyen de commande (12) monté sur la face arrière de la tige centrale (3), un ressort de pression (11) comprimé entre la face arrière du piston (18) et le moyen de commande (12), un deuxième ressort de pression (10), comprimé entre le moyen de commande (12) et un support de ressort (9) déplaçable axialement dans le boîtier (17) jusqu'à une butée (20), et, monté frontalement sur le boîtier, un moyen d'étanchéité annulaire (4) venant au contact de la tubulure de raccordement ou du moyen analogue sous la pression du deuxième ressort (10), la surface du piston (18) étant soit plus grande, en cas de raccordement en surpression, soit plus petite, en cas de raccordement en dépression, que celle du moyen d'étanchéité (4) et les mâchoires de serrage (2) présentant des surfaces intérieures venant au contact d'un bord (21), évasé radialement, de l'extrémité avant de la tige centrale (3).

2. Raccord à emboîtement selon la revendication 1, caractérisé en ce que le déplacement vers l'avant de la tige centrale (3) est limité par une surface de butée (16) du boîtier (17) destinée à rencontrer une surface de butée du moyen de commande (12).

3. Raccord à emboîtement selon l'une des revendications précédentes, caractérisé en ce que le déplacement vers l'avant du piston (18) et donc des mâchoires de serrage (2) est limité par des surfaces de butée (15 ou 24) en regard, prévues sur un bord du boîtier (17) ou sur les mâchoires de serrage (2).

4. Raccord à emboîtement pour assurer un raccordement étanche à la pression avec un dispositif muni d'une tubulure de raccordement ou d'un moyen analogue, comprenant un boîtier (70) sensiblement cylindrique, à l'extrémité frontale duquel sont montées des mâchoires de serrage (57) agencées de manière à pouvoir s'écarter radialement à leurs extrémités avant, un piston (50) formant un joint étanche par rapport du boîtier et déplaçable axialement dans celui-ci, un moyen de commande (78) monté sur la face arrière d'une tige (63) et s'étendant de façon centrée dans le boîtier (70), un ressort de pression comprimé entre la face arrière du piston (50) et l'intérieur du boîtier (70), un deuxième ressort de pression, comprimé entre le moyen de commande (78) et le boîtier (70), et, monté frontalement sur le boîtier, un moyen d'étanchéité annulaire (60) venant au contact de la tubulure de raccordement ou du moyen analogue sous la pression du deuxième ressort (10), la surface active du piston (50) étant soit plus grande, en cas de raccordement en surpression, soit plus petite, en cas de raccordement en dépression, que celle du moyen d'étanchéité (60) et les mâchoires de serrage (57) présentant des surfaces intérieures venant au contact d'un bord (59), évasé radialement, de l'extrémité avant de la tige centrale (63).

5.  Raccord à emboîtement selon l'une des revendications précédentes, caractérisé en ce qu'il est prévu une ouverture latérale (1) dans la partie avant du boîtier pour l'admission d'un fluide gazeux ou liquide.

6.  Raccord à emboîtement selon l'une des revendications précédentes, caractérisé en ce qu'une ouverture d'admission (22), reliée à un passage pratiqué dans la tige centrale (23), est prévue au centre du moyen de commande (12).

Fig. 1

Fig.2

EP 0 355 155 B1

Fig.3